# EUROPÄISCHE PATENTSCHRIFT

(11) **EP 0 904 223 B1**
(45) Veröffentlichungstag und Bekanntmachung des Hinweises auf die Patenterteilung: **06.03.2002**
(21) Anmeldenummer: 98922678.2
(22) Anmeldetag: 09.04.1998
(51) Int. Cl.: B60T 11/06, B60T 11/04

(54) **EINSTELLVORRICHTUNG MIT SELBSTTÄTIGEM LÄNGENAUSGLEICH FÜR EINEN BETÄTIGUNGSZUG**
REGULATOR FOR AUTOMATICALLY ADJUSTING THE LENGTH OF AN ACTUATING LINK
REGULATEUR D'AJUSTEMENT AUTOMATIQUE DE LA LONGUEUR D'UNE CORROIE D'ACTIONNEMENT

(30) Priorität: 11.04.1997 DE 19715304; 09.08.1997 DE 19734572
(43) Veröffentlichungstag der Anmeldung: 31.03.1999
(73) Patentinhaber: KÜSTER & Co. GmbH, 35630 Ehringshausen (DE)
(72) Erfinder: KRUG, Michael, D-35614 Asslar (DE); SCHMIDT, Thomas, D-35410 Hungen (DE)
(74) Vertreter: Müller, Eckhard, Dr.
(86) Internationale Anmeldenummer: EP9802096
(87) Internationale Veröffentlichungsnummer: WO9846463

(56) Entgegenhaltungen:
- DE-A- 3 741 530
- DE-A- 19 546 931

## Beschreibung

Die Erfindung betrifft eine Einstellvorrichtung nach dem Oberbegriff des Anspruchs 1.

Bei Betätigungszügen tritt im allgemeinen das Problem auf, daß sie fertigungsbedingt nicht exakt gleich lang ausgebildet sind, so daß für eine genaue Einstellung ihrer Länge, insbesondere bei dem Einsatz als Betätigungszug für Bremsen, eine Einstellung vorgenommen werden muß. Auch aufgrund der Längung der Betätigungszüge während des Betriebes und aufgrund von bspw. Spiel der Bremsen selbst bedarf es auch einer Einstellung der Betätigungszüge während der Nutzungsdauer.

Eine derartige Einstellvorrichtung ist bereits aus der DE 37 41 530 A1 bekannt. Für den selbsttätigen Ausgleich von Längungen in den Seilen von Feststellbremsen ist dort eine Nachstellvorrichtung vorgeschlagen, die zur Bremsenbetätigung ein mittels eines Zugseils verstellbares längliches Übertragungsglied aufweist, an dem ein doppelarmiges Ausgleichsjoch angeordnet ist, welches zu jeweils einer Radbremse führende Seilstränge hält. Die Hebelarme des Ausgleichsjochs sind relativ zueinander verschwenkbar gelagert und zur Übertragung von Bremskräften in der einen Schwenkrichtung mittels einer Sperrvorrichtung an einem Verschwenken gehindert. Eine Spannvorrichtung versucht dabei ständig, die Hebelarme des Ausgleichsjochs in die andere Richtung zu verschwenken. Im einzelnen ist ein Übertragungsglied vorgesehen, zwischen dessen U-Schenkeln ein doppelarmiges Abstützjoch um eine feststehende Schwenkachse verschwenkbar gelagert ist. Das Abstützjoch ist durch zwei, jeweils einen Hebelarm bildende, in einer gemeinsamen Ebene angeordnete Jochglieder gebildet, die jeweils für sich um die Schwenkachse verschwenkbar sind und von jeweils einer Längsseite des Übertragungsgliedes abragen. Eine Spannvorrichtung dient dazu, die beiden Jochglieder zum Ausgleich von Längungen der Seilstränge zu verschwenken. Sie ist vorzugsweise durch eine auf der Schwenkachse sitzende Druckfeder gebildet, die sich mit ihren Federendstücken jeweils an einem der Jochglieder abstützt. Mit einer Sperrvorrichtung werden die Jochglieder an einer Verdrehung bzw. Schwenkung entgegen der Spannrichtung der Seilstränge gesperrt. Diese Sperrvorrichtung weist eine auf der Schwenkachse sowohl verschwenkbar als auch radial verschiebbar angeordnete Sperrklinke auf, an der sich eine Rückstellfeder abstützt, die versucht, die Sperrklinke in ihrer Sperrstellung zu halten. Der Sperrklinke ist an einem Jochglied an einem Umfangsabschnitt einer Sperrverzahnung zugeordnet. Die Sperrvorrichtung arbeitet somit schrittweise, so daß lediglich nach einer vorbestimmten Seillängung die Sperrklinke in eine neue Zahnlücke der Sperrverzahnung einfällt und die Jochglieder in einer neuen Relativstellung zueinander festlegt. Das Sperren kommt dadurch zustande, daß sich die Sperrklinke in ihrer Eingriffstellung ein- oder beidseitig des Jochgliedes an einer Anschlagfläche abzustützen vermag und das Jochglied durch den Seilstrang an einem Verschwenken im Uhrzeigersinn gehindert ist. Diese bekannte Nachstellvorrichtung ist relativ aufwendig aufgebaut und weist große äußere Abmessungen auf.

In der DE 43 02 250 C2 ist desweiteren ein Fahrzeug-Bremssystem mit einer Kabelspanneinrichtung für ein Parkbremsenkabel beschrieben mit einer Verriegelungseinrichtung, die in einem Verriegelungszustand so betätigbar ist, daß sie ursprünglich die Einstellerratsche in einem verriegelten Zustand in Bezug auf den Hebel gegen die Vorspannkraft einer Einstellfeder hält, um hierdurch eine Verbindung des Kabels mit der Einstellerratsche zuzulassen.

Aus der DE 195 46 931 A1 ist eine weitere Einstellvorrichtung bekannt. Zum selbsttätigen Längenausgleich weist die Einstellvorrichtung eine i. w. gehäuseartige Aufnahme mit zwei um unterschiedliche Achsen schwenkbare, durch Federelemente vorgespannte Rastsegmente, Rasthebel o. dgl. auf, die jeweils mit einem Betätigungszug, insbesondere Seilzug, verbindbar sind. Weiterhin ist ein in der Aufnahme verschiebbar geführten Sperrstück vorgesehen, welches bei einer Betätigung des Betätigungszuges bzw. Seilzuges von einer die Rastsegmente entsperrenden Position in eine die Rastsegmente sperrende Position überführbar ist. Obgleich sich die bekannte Einstellvorrichtung in der Praxis gut bewährt hat, besteht ein Bedürfnis nach einer kompakteren Bauform. Hierbei ist zu berücksichtigen, daß der für die Einstellvorrichtung vorhandene Bauraum, bspw. im Bereich des Betätigungshebels selbst, oder in dem Bereich des Fahrzeuges, in welchem eine Verzweigung der Betätigungszüge zu den beiden Hinterradbremsen vorgesehen ist, nur gering ist.

Aufgabe der Erfindung ist es, eine Einstellvorrichtung der eingangs genannten Art anzugeben, welche im Aufbau kompakt ist und einen selbsttätigen Längenausgleich des Betätigungszuges ermöglicht.

Diese Aufgabe wird nach der Erfindung bei der Vorrichtung mit den eingangs genannten Merkmalen i. w. dadurch gelöst, daß in einer Ausnehmung eines Nachstellarms als Schwenklager für den weiteren Nachstellarm wenigstens ein Führungseinsatz unverdrehbar aufgenommen ist, der andere Nachstellarm um die Schwenkachse schwenkbar an dem Führungseinsatz und das Gesperre bzgl. der Schwenkachse radial verschiebbar an oder in dem Führungseinsatz gelagert sind.

Durch diese Maßnahmen wird eine äußerst kompakt bauende Einstellvorrichtung geschaffen, welche zudem konstruktiv einfach aufgebaut ist. Dies wird dadurch erreicht, daß das Schwenklager durch an den Nachstellarmen selbst angeordnete Elemente, nämlich die Führungseinsätze gebildet wird, wobei diese Führungseinsätze nicht nur das Schwenklager für beide Nachstellarme bilden, sondern ein weiteres Lager für das radial verschiebbare Gesperre aufweisen. Auch ist es nicht erforderlich, aufgrund dieses konstruktiven Aufbaus eine Federvorspannung für das Gesperre vorzusehen. Insgesamt wird durch diese Ausgestaltung nicht nur ein äußerst kompakte Bauform der Einstellvorrichtung, sondern auch eine einfache Verschwenkbarkeit der Nachstellarme mittels des integrierten Schwenklagers erreicht, wobei zusätzlich bei einer Betätigung des Betätigungselements das in oder an dem Führungseinsatz gelagerte Gesperre radial bzgl. der Schwenkachse verschoben und somit eine sichere Fixierung der Nachstellarme während der Betätigung des Betätigungselementes gewährleistet wird.

Dabei hat es sich als vorteilhaft erwiesen, daß das Gesperre in einer Ausnehmung o. dgl. Aufnahme der Nachstellarme oder des Schwenklagers integriert ist. Hierdurch wird zum einen dafür Sorge getragen, daß bei einer Betätigung des Betätigungselements die Nachstellarme sicher in ihrer relativen Positionierung zueinander fixiert sind. Zum anderen wird mit der Maßnahme, das Gesperre in eine Aufnahme der Nachstellarme oder des Schwenklagers zu integrieren, eine noch kompaktere Bauform der Einstellvorrichtung gewährleistet.

Nach einer anderen vorteilhaften Ausgestaltung der Erfindung ist das Gesperre als Sperrsegment mit Außenverzahnung ausgebildet und an einem Nachstellarm radial zur Schwenkachse verschiebbar geführt.

Dabei bietet es sich an, daß der andere Nachstellarm eine Innenverzahnung aufweist, die bei Betätigung des Betätigungselementes in Eingriff mit der Außenverzahnung gelangt.

Dabei bietet es sich an, daß das Gesperre mit einem Bolzen o. dgl. verbunden ist, der mittels des Betätigungselements unmittelbar oder bspw. über einen Schwenkhebel verstellbar ist.

Gemäß einer anderen vorteilhaften konstruktiven Ausgestaltung der Erfindung sind die Nachstellarme bzw. das Schwenklager mit Spiel an dem Bolzen o. dgl. gehalten.

Der Einbau der erfindungsgemäßen Einstellvorrichtung beim Kraftfahrzeughersteller wird dadurch erleichtert, daß die Nachstellarme jeweils eine Bohrung o. dgl. aufweisen und mittels eines in die Bohrung gesteckten Arretierstiftes gegen die Wirkung des Federelements in eine Anlieferungsposition feststellbar sind. Nach der Montage der Einstellvorrichtung wird der Arretierstift aus den Bohrungen entfernt, so daß die Einstellvorrichtung ihre Funktion aufnehmen kann.

Schließlich hat es sich als vorteilhaft erwiesen, daß der Einstellvorrichtung ein Anschlag zugeordnet ist, der bei Nichtbetätigung des Betätigungselements das Gesperre löst oder entrastet. Hierdurch besteht die Möglichkeit, daß sich die Nachstellarme in beide Drehrichtungen einstellen können. Diese Verstellung in beide Richtungen ist insbesondere dann von Vorteil, wenn z.B. witterungsbedingt die Bremsbacken anhaften bzw. anfrieren, so daß unter solchen Umständen eine ungewollte unter Umständen irreversible Nachstellung vermieden ist.

Weitere Vorteile und Anwendungsmöglichkeiten der vorliegenden Erfindung ergeben sich aus der nachfolgenden Beschreibung der Ausführungsbeispiele anhand der Zeichnungen.

Es zeigen:
- Figuren 1a bis e: in einer schematischen und perspektivischen Explosionsdarstellung den Zusammenbau bzw. Aufbau der Nachstellarme, des Schwenklagers und Gesperres nach einer ersten Ausführungsform der Erfindung,
- Figur 2a: die erfindungsgemäße Vorrichtung in einem Anlieferungszustand, bei dem die Nachstellarme durch einen in Bohrungen gesteckten Arretierstift in einer Anlieferungsposition arretiert sind,
- Figur 2b: die Einstellvorrichtung der Figur 2a in verschiedenen Positionierungen nach Entfernen des Arretierungsstiftes,
- Figur 3a: ein zweites Ausführungsbeispiel der Einstellvorrichtung mit in der Klemmposition befindlichem Klemmgesperre,
- Figur 3b: die Einstellvorrichtung der Figur 3a mit gelöstem Klemmgesperre und
- Figur 3c: eine schematische Darstellung der Nachstellarme in Draufsicht.

Die Einstellvorrichtung 27 weist einen ersten Nachstellarm 1 auf, welcher zweigeteilt ausgebildet ist. Der Nachstellarm 1 besitzt eine Halterung 2 zur Anlenkung der Betätigungszüge 3 bzw. 4 sowie zwei kreissegmentförmige Aufnehmungen 5, welche bei dem hier gewählten Ausführungsbeispiel durch eine zentrale Bohrung 6 miteinander verbunden sind.

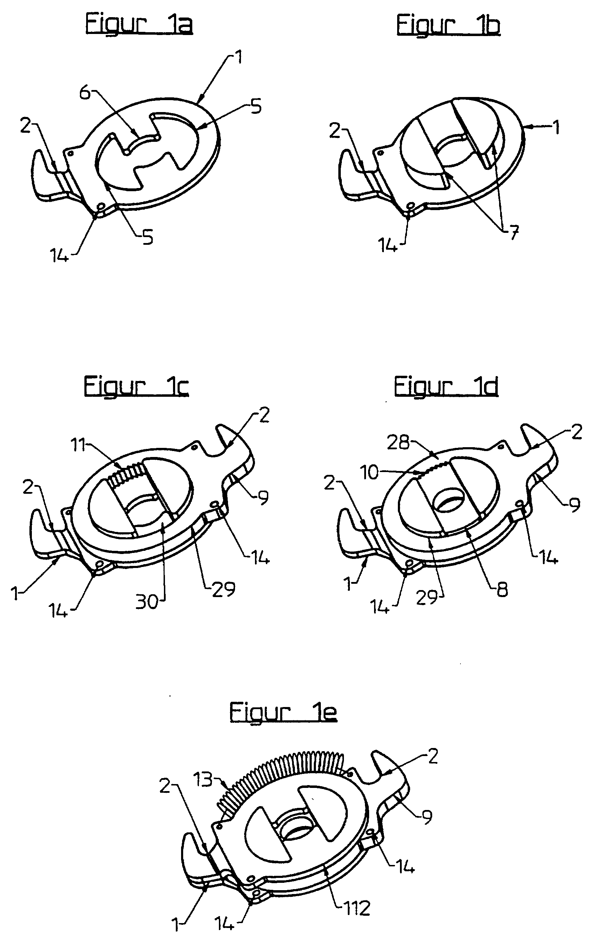

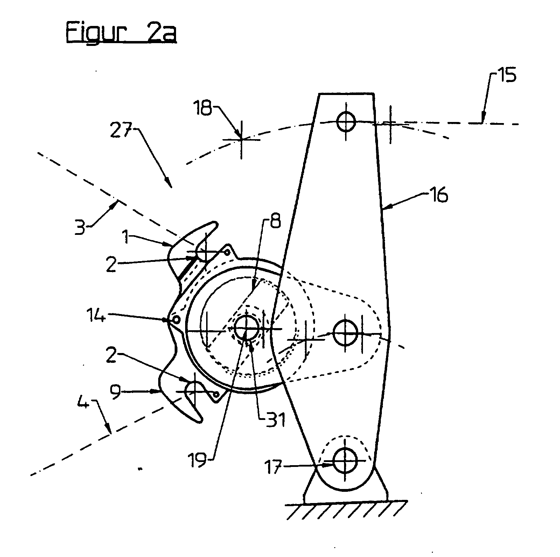

In den Nachstellarm 1 bzw. in die Aufnehmungen 5 sind, wie aus Figur 1b zu ersehen, bei dem hier gewählten Ausführungsbeispiel als Schwenklager 29 zwei kreissegmentförmige Führungseinsätze 7 eingesetzt, welche gegenüber dem scheibenförmigen Nachstellarm 1 axial vorstehen. Auf diese Führungseinsätze 7 ist der zweite Nachstellarm 9 aufgesteckt, wie dies aus Figur 1c zu ersehen ist. In der zwischen den beiden Führungseinsätzen 7 verbleibenden Aufnahme 30 ist als Gesperre 28 ein Sperrsegment 8 verschiebbar geführt, welches bei einem Betätigen der Bremse mit seiner Außenverzahnung 10 mit der am anderen Nachstellarm 9 vorgesehenen Innenverzahnung 11 in Wirkstellung treten kann. Die Einstellvorrichtung 27 wird komplettiert durch ein mit dem Nachstellarm 1 gemäß Figur 1a vergleichbaren Teil 12, wobei die beiden radial nach außen weisenden Haken des Nachstellarms 1 und des Teils 12, welche bei dem hier gewählten Ausführungsbeispiel zusammen die Halterung 2 für den Betätigungszug 3 bzw. 4 bilden, zusammengebogen sind.

Der zweite Nachstellarm 9 weist ebenfalls eine Halterung 2 für einen Betätigungszug 3 bzw. 4 auf. Die beiden Nachstellarme 1 bzw. 9 werden mittels einem Federelement 13 gespannt, welches bestrebt ist, die beiden Nachstellarme 1, 9 gegeneinander zu verschwenken.

Selbstverständlich ist es auch möglich, den einen Nachstellarm 1 einstückig auszubilden.

Auch ist es denkbar, anstelle einer Feder 13 jeweils separate, an einem Nachstellarm angreifende Federn vorzusehen, welche an einem Gegenlager angelenkt sind. Anstelle der Zugfeder 13 kann bspw. auch eine Drehfeder eingesetzt werden.

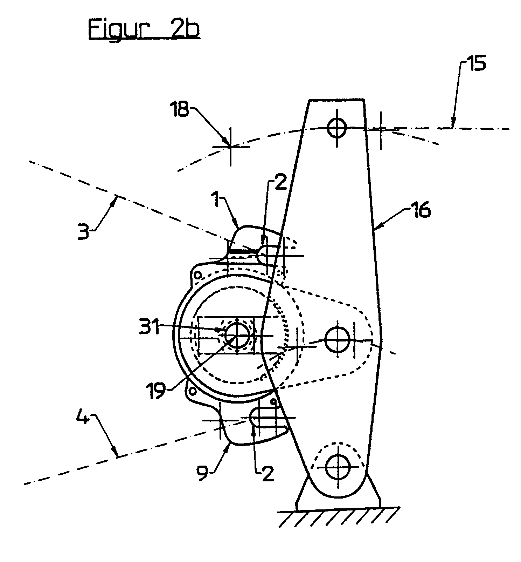

Der Anlieferungszustand der Einstelleinrichtung 27 ist in Figur 2a dargestellt. Dabei sind die beiden Nachstellarme 1, 9 mittels eines in eine Bohrung 14 eingesteckten Arretierstiftes gegen die Kraft des Federelementes 13 in eine Schwenkstellung gegeneinander gebracht, damit die Züge 3, 4 bequem in die Aufnahmen 2 eingehängt werden können.

Bei dem hier gewählten Ausführungsbeispiel erfolgt die Betätigung der Bremszüge 3, 4 über einen vom Handbremshebel kommenden Seilzug 15, welcher an einem Schwenkhebel 16 angelenkt ist. Der Schwenkhebel 16 ist an einem karosserieseitig vorgesehenem Auge 17 verschwenkbar gelagert.

Nach Entfernen des Sperrstiftes aus der Bohrung 14 bewirkt die Zugfeder 13 ein Verschwenken der beiden Nachstellarme 1, 9 derart, daß alle Lose aus dem System, bspw. den Seilzügen 4 und 3 herausgenommen ist. Wenn der Handbremshebel oder ein Betätigungselement der Bremse betätigt wird und vermittels des Seilzuges 15 der Schwenkhebel 16 in Richtung des Handbremshebels bzw. des Betätigungselementes der Bremse verschwenkt wird, erfolgt zunächst eine Mitnahme des verstellbaren Sperrsegmentes 8, über die Zahnung 10 eine Verriegelung und eine entsprechende Mitnahme der Einstelleinrichtung in gesperrtem bzw. verriegeltem Zustand der Nachstellarme 1, 9. Wenn das Betätigungselement der Bremse oder der Handbremshebel wieder gelöst werden, gelangt der Schwenkhebel 16 in die mit Bezugszeichen 18 angezogene Lage. Wenn nun eine Seillose im System auftritt, werden durch die Kraft des Federelementes 13 die beiden Nachstellarme 1, 9 verschwenkt, bis alle Lose aus dem System herausgenommen ist.

Bei einer ungleichen Längung der beiden Seilzüge 3, 4 ergibt sich eine Drehung der Nachstellarme 1, 9 um die Schwenkachse 19, so daß auch in diesem Betriebszustand ein Längenausgleich erfolgt. Gleiches gilt für den Fall, daß toleranzbedingt ungleiche Gegenkräfte der Bremsen auftreten.

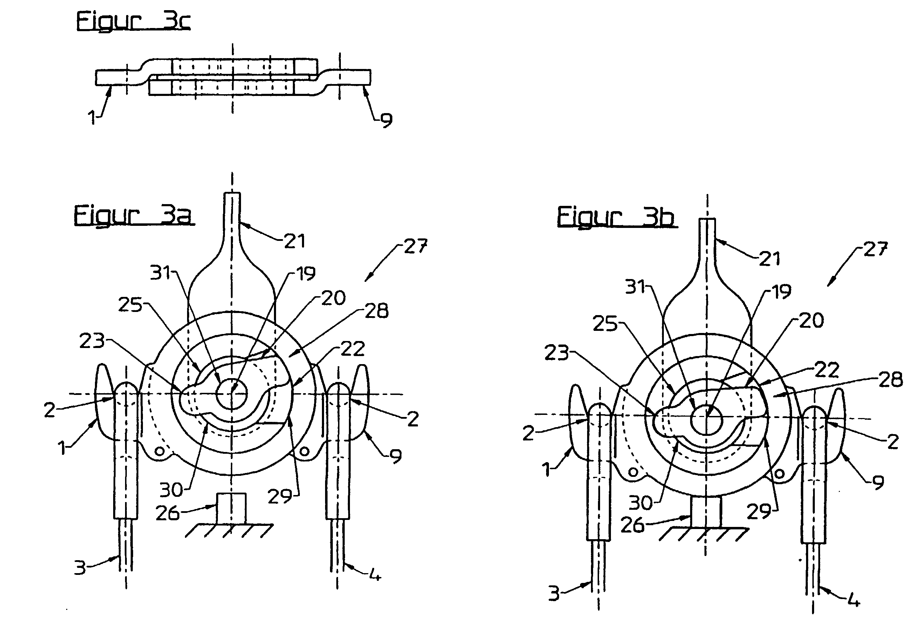

Bei der alternativen Ausführungsform gemäß den Figuren 3a, b und c erfolgt die Verriegelung der beiden Nachstellarme 1, 9 nicht mittels einer Verrastung, sondern durch die Klemmwirkung eines Sperrelementes 20 als Gesperre 28. Auch hierbei weist die Einstellvorrichtung 27 zwei auf einer gemeinsamen Schwenkachse 19 gegeneinander verschwenkbare Nachstellarme 1, 9 auf, mit Halterungen 2 für die Seilzüge 3 bis 4. Diese Einstellvorrichtung 27 ist bevorzugt am Handbremshebel 21 angebracht. Bei Betätigung des Handbremshebels 21 wird der Bolzen 31 in Richtung des Handbremshebels 21 und damit auch das Sperrsegment 20 in diese Richtung gezogen, wobei das freie Ende des Sperrelementes 20 an der Wandung 22, insbesondere Innenwandung des Nachstellarmes 1 verklemmt wird.

Das Sperrelement 20 ist mit einer Nase 23 in einer etwa kreisförmigen Ausnehmung 24 eines Führungsteiles 25 gelagert, welches in eine entsprechende Ausnehmung des anderen Nachstellarmes 9 eingesetzt ist. Selbstverständlich ist es auch möglich, daß der Nachstellarm 9 mit Führungsteil 25 einstückig ausgebildet ist.

Beim Lösen des Handbremshebels 21 gelangt die Einstelleinrichtung gegen einen karosserieseitigen Anschlag 26, wodurch das Sperrelement 20 verschwenkt wird und die Klemmwirkung an der Wandung 22 des einen Nachstellarmes 1 aufgehoben ist. Damit ist eine Nachstellung bzw. ein Längenausgleich für beide seilzüge 3, 4 getrennt durch entsprechende Schwenkbewegungen der Nachstellarme 1 und 9 gewährleistet.

Gegenüber dem vorhergehenden Ausführungsbeispiel ist eine Verstellung der Nachstellarme 1, 9 in beide Drehrichtungen möglich. Würde man aber bei dem vorhergehenden Ausführungsbeispiel ebenfalls ein Anschlag vorsehen, so wäre auch hier eine Nachstellung in beide Richtungen, also in Bezug auf eine Längung oder Verkürzung möglich. Diese Verstellung in beide Richtungen ist insbesondere dann von Vorteil, wenn z.B. witterungsbedingt die Bremsbacken anhaften, um insoweit eine ungewollte Nachstellung zu meiden.

Denkbar bzgl. der Ausführungsform gemäß Figuren 3a bis c ist auch, daß auf beiden Seiten des Führungsteiles 25 jeweils ein Nachstellarm 1 bzw. 9 aufgesteckt ist, wobei jedem Nachstellarm 1 bzw. 9 jeweils ein Sperrelement 20 zugeordnet ist. Vorteil hiervon ist, daß eine Nachstellung über einen längeren Weg kraftschlüssig möglich ist.

### Bezugszeichenliste

- 1 -: Nachstellarm
- 2 -: Halterung
- 3 -: Betätigungszug
- 4 -: Betätigungszug
- 5 -: Aufnehmung
- 6 -: Bohrung
- 7 -: Führungseinsatz
- 8 -: Sperrsegment
- 9 -: Nachstellarm
- 10 -: Außenverzahnung
- 11 -: Innenverzahnung
- 12 -: Teil
- 13 -: Federelement
- 14 -: Bohrung
- 15 -: Seilzug
- 16 -: Schwenkhebel
- 17 -: Anlage
- 18 -: Position
- 19 -: Schwenkachse
- 20 -: Sperrelement
- 21 -: Handbremshebel
- 22 -: Wandung
- 23 -: Nase
- 24 -: Ausnehmung
- 25 -: Führungsteil
- 26 -: Anschlag
- 27 -: Einstellvorrichtung
- 28 -: Gesperre
- 29 -: Schwenklager
- 30 -: Aufnahme
- 31 -: Bolzen

## Patentansprüche

1. Einstellvorrichtung (27) mit selbsttätigem Längenausgleich für einen Betätigungszug (3, 4) oder Seilzug (15) zur Betätigung einer Fahrzeugbremse mittels eines Betätigungselements, wie Bremshebel oder Handbremshebel (21), wobei die Einstellvorrichtung (27) zwei schwenkbar gelagerte, wenigstens durch ein Federelement (13) vorgespannte Nachstellarme (1, 9) aufweist, die jeweils mit einem zu den Bremsen führenden Betätigungszug (3, 4) verbindbar sind, und mit einem Gesperre (28) zum Sperren der Schwenkbewegung der Nachstellarme (1, 9) im Falle der Betätigung des mit den Nachstellarmen (1, 9) über einen Seilzug (15) gekoppelten Betätigungselementes, wobei die Nachstellarme (1, 9) eine gemeinsame Schwenkachse (19) aufweisen, **dadurch gekennzeichnet, daß** in einer Ausnehmung (5) eines Nachstellarms (1) als Schwenklager für den weiteren Nachstellarm (9) wenigstens ein Führungseinsatz (7) unverdrehbar aufgenommen ist, der andere Nachstellarm (9) um die Schwenkachse (19) schwenkbar an dem Führungseinsatz (7) und das Gesperre (28) bzgl. der Schwenkachse (19) radial verschiebbar an oder in dem Führungseinsatz (7) gelagert sind.

2. Einstellvorrichtung nach Anspruch 1, **dadurch gekennzeichnet, daß** das Gesperre (28) in einer Ausnehmung o. dgl. Aufnahme (30) des Führungseinsatzes (7) integriert ist.

3. Einstellvorrichtung nach einem der vorhergehenden Ansprüche, **dadurch gekennzeichnet, daß** das Gesperre (28) als Sperrsegment (8) mit Außenverzahnung (10) ausgebildet und an einem Nachstellarm (1) radial zur Schwenkachse (19) verschiebbar geführt.

4. Einstellvorrichtung nach Anspruch 3, **dadurch gekennzeichnet, daß** der andere Nachstellarm (9) eine Innenverzahnung (11) aufweist, die bei Betätigung des Betätigungselementes in Eingriff mit der Außenverzahnung (10) gelangt.

5. Einstellvorrichtung nach einem der vorhergehenden Ansprüche, **dadurch gekennzeichnet, daß** das Gesperre (28) mit einem Bolzen (31) o. dgl. verbunden ist, der mittels des Betätigungselements unmittelbar oder bspw. über einen Schwenkhebel (16) verstellbar ist.

6. Einstellvorrichtung nach Anspruch 5, **dadurch gekennzeichnet, daß** die Nachstellarme (1, 9) bzw. das Schwenklager (29) mit Spiel an dem Bolzen (31) o. dgl. gehalten sind.

7. Einstellvorrichtung nach einem der vorhergehenden Ansprüche, **dadurch gekennzeichnet, daß** die Nachstellarme (1, 9) jeweils eine Bohrung (14) o. dgl. aufweisen und mittels eines in die Bohrung (14) gesteckten Arretierstiftes gegen die Wirkung des Federelements (13) in einer Anlieferungsposition feststellbar sind.

8. Einstellvorrichtung nach einem der vorhergehenden Ansprüche, **dadurch gekennzeichnet, daß** der Einstellvorrichtung (27) ein Anschlag zugeordnet ist, der bei Nichtbetätigung des Betätigungselements das Gesperre (28) löst bzw. entrastet.

## Claims

1. Adjusting device (27) with automatic length compensation for an actuating pull (3, 4) or cable pull (15) for the actuation of a vehicle brake by means of an actuating element, such as a brake lever or a handbrake lever (21), wherein the adjusting device (27) comprises two pivotably mounted resetting arms (1, 9) which are biassed at least by a spring element (13) and which are each connectible with a respective actuating pull (3, 4) leading to the brakes, and with a ratchet (28) for blocking the pivot movement of the resetting arms (1, 9) in the case of actuation of the actuating element coupled with the resetting arms (1, 9) by way of a cable pull (15), wherein the resetting arms (1, 9) have a common pivot axis (19), **characterised in that** at least one guide insert (7) is non-rotatably received in a recess (5) of one resetting arm (1) as a pivot bearing for the other resetting arm (9), the other resetting arm (9) is mounted at the guide insert (7) to be pivotable about the pivot axis (19) and the ratchet (28) is mounted at or in the guide insert (7) to be radially displaceable with respect to the pivot axis (19).

2. Adjusting device according to claim 1, **characterised in that** the ratchet (28) is integrated in a recess or like receptacle (30) of the guide insert (7).

3. Adjusting device according to one of the preceding claims, **characterised in that** the ratchet (28) is constructed as a blocking segment (8) with an external toothing (10) and is guided at one resetting arm (1) to be displaceable radially relative to the pivot axis (19).

4. Adjusting device according to claim 3, **characterised in that** the other resetting arm (9) has an internal toothing (11) which enters into engagement with the external toothing (10) on actuation of the actuating element.

5. Adjusting device according to one of the preceding claims, **characterised in that** the ratchet (28) is connected with a pin (31) or the like, which is adjustable by means of the actuating element directly or, for example, by way of a pivot lever (16).

6. Adjusting device according to claim 5, **characterised in that** the resetting arms (1, 9) or the pivot bearing (29) is or are held with play at the pin (31) or the like.

7. Adjusting device according to one of the preceding claims, **characterised in that** the resetting arms (1, 9) each have a respective bore (14) or the like and are fixable in a delivery position by means of a locking pin, which is plugged into the bore (14), against the action of the spring element (13).

8. Adjusting device according to one of the preceding claims, **characterised in that** the adjusting device (27) is associated with an abutment which releases or removes the detenting of the ratchet (28) in the case of non-actuation of the actuating element.

## Revendications

1. Dispositif de réglage (27) à compensation automatique de longueur pour un câble d'actionnement (3, 4) ou un câble de traction (15) pour l'actionnement d'un frein de véhicule à l'aide d'un élément d'actionnement, comme par exemple un levier de frein ou un levier de frein à main (21), dans lequel le dispositif de réglage (27) comporte deux bras de rattrapage de jeu (1, 9) qui sont montés de manière à pouvoir pivoter, sont précontraints au moins par un élément de ressort (13) et peuvent être reliés respectivement à un câble d'actionnement (3, 4) qui est raccordée aux freins, et comportant un dispositif de blocage (28) servant à bloquer le déplacement pivotant des bras de rattrapage de jeu (1, 9) dans le cas de l'élément d'actionnement couplé aux bras de rattrapage (1, 9) par l'intermédiaire d'un câble de traction (15), les bras de rattrapage de jeu (1, 9) possédant un axe de pivotement commun (19), **caractérisé en ce qu'**au moins un insert de guidage (7) est logé sans possibilité de rotation dans un logement (5) d'un bras de rattrapage (1), en tant que palier pivotant pour l'autre bras de rattrapage de jeu (9), que l'autre bras (9) est monté de manière à pouvoir pivoter sur l'insert de guidage (7) autour de l'axe de pivotement (19), et que le dispositif de blocage (28) ou l'axe de pivotement (19) est monté de manière à être déplaçable radialement sur ou dans l'insert de guidage (7).

2. Dispositif de réglage selon la revendication 1, **caractérisé en ce que** le dispositif de blocage (28) est intégré dans un évidement ou dans un logement analogue (30) de l'insert de guidage (7).

3. Dispositif de réglage selon l'une des revendications précédentes, **caractérisé en ce que** le dispositif de blocage (28) est agencé sous la forme d'un segment de blocage (8) comportant une denture extérieure (10) et est sur un bras de rattrapage de jeu (1) de manière à être déplaçable radialement par rapport à l'axe de pivotement (19).

4. Dispositif de réglage selon la revendication 3, **caractérisé en ce que** l'autre bras de rattrapage de jeu (9) comporte une denture intérieure (11) qui, lors de l'actionnement de l'élément d'actionnement, vient en prise avec la denture extérieure (10).

5. Dispositif de réglage selon l'une des revendications précédentes, **caractérisé en ce que** le dispositif de blocage (28) est relié à un goujon (31) ou analogue qui est réglable au moyen de l'élément d'actionnement directement ou par exemple par l'intermédiaire d'un levier pivotant (16).

6. Dispositif de réglage selon la revendication 5, **caractérisé en ce que** les bras de rattrapage de jeu (1, 9) ou le palier pivotant (29) sont retenus avec jeu sur le goujon (31) ou analogue.

7. Dispositif de réglage selon l'une des revendications précédentes, **caractérisé en ce que** les bras de rattrapage de jeu (1, 9) comportent chacun un perçage (14) ou analogue et peuvent être fixés dans une position de livraison à l'aide d'une goupille de blocage qui est enfichée dans le perçage (14) et empêche l'action de l'élément de ressort (13).

8. Dispositif de réglage selon l'une des revendications précédentes, **caractérisé en ce qu'**au dispositif de réglage (27) est associée une butée, qui, dans le cas du non actionnement de l'élément d'actionnement débloque ou désencliquette le dispositif de blocage (28).
